# EUROPÄISCHE PATENTANMELDUNG

(11) **EP 2 381 559 A2**
(43) Veröffentlichungstag der Anmeldung: **26.10.2011**
(21) Anmeldenummer: 11003407.1
(22) Anmeldetag: 26.04.2011
(51) Int. Cl.: H02K 1/14

(54) **Mehrphasige dynamoelektrische Maschine der Klauenpolbauart**

(30) Priorität: 24.04.2010 DE 102010018146
(71) Anmelder: Kolektor Group d.o.o., 5280 Idrija (SI)
(72) Erfinder: Lukachev, Evgeny, 248030 Kaluga (RU); Lahajnar, Franci, 5282 Cerkno (SI)
(74) Vertreter: Grättinger Möhring von Poschinger Patentanwälte Partnerschaft

(57) **Zusammenfassung**

Bei einer mehrphasigen dynamoelektrischen Klauenpolmaschine umfasst der Stator eine Spulenanordnung (1) mit mehreren Spuleneinheiten (2). Diese weise jeweils mindestens eine zwischen zwei zugeordneten, mit Klauen ausgestatteten Polscheiben (3) angeordnete Ringspule (4) auf. Dabei sind sämtliche Polscheiben identisch und weisen axial vorspringende Ansätze mit formschlüssig ineinander greifenden, durch eine Abfolge von axialen Vorsprüngen (10) und Ausnehmungen gebildete erste Verzahnungen auf. Die beiden Polscheiben jeder Spuleneinheit liegen im Bereich der Stirnseiten der Ansätze unmittelbar aneinander an, wobei durch die in Umfangsrichtung verkürzte Ausführung mindestens jeweils eines Vorsprunges (10a) im Bereich der ersten Verzahnungen mindestens ein Durchbruch (15) für einen Spulenwicklungsanschluss besteht, während die beiden betreffenden Polscheiben im Übrigen im Bereich der ersten Verzahnungen eine geschlossene Oberfläche definieren. Ferner liegen die einander gegenüberliegenden Polscheiben zweier einander benachbarter Spuleneinheiten unmittelbar aneinander an.

## Beschreibung

Die vorliegende Erfindung betrifft eine mehrphasige dynamoelektrische Maschine der Klauenpolbauart, insbesondere einen Mehrphasen-Klauenpolmotor, mit einem Stator und einem bezüglich einer Rotationsachse drehbar gelagerten Rotor.

Dynamoelektrische Maschinen der Klauenpolbauart sind in vielfältigen Ausgestaltungen bekannt. Sie sind, sei es nun als Klauenpolmotor oder aber als Klauenpolgenerator, bezogen auf hinsichtlich der Leistung vergleichbare dynamoelektrische Maschinen anderer Bauart relativ kompakt. Darüber hinaus erfolgt typischerweise eine elektronische Kommutierung, was die betreffenden Maschinen langlebig, zuverlässig und wartungsarm und, nachdem solche Maschinen von Haus aus entstört sind, zum Einsatz in einer störempfindlichen Umgebung geeignet macht. Was Klauenpolmotoren betrifft, so stellen diese insbesondere bei einer Ausführung als Außenrotormotor überdies ein vergleichsweise großes Drehmoment bereit.

Zu dem umfangreichen Stand der Technik zu dynamoelektrischen Maschinen der Klauenpolbauart zählen insbesondere die nachfolgenden Dokumente: DE 4106484 A1, US 6,492,758 B1, AT 504456 A1, DE 29812916 U1, WO 2009/133295 A2, DE 102007040355 A1, JP 2008-167615 A, DE 202009004395 U1, WO 2004/070922 A1, DE 202008013426 U1, EP 2040350 A2, DE 102005036041 A1 und WO 2010/041301 A1.

Eine - als Motor ausgeführte - dreiphasige dynamoelektrische Maschine der Klauenpolbauart mit den im Oberbegriff des Anspruchs 1 angegebenen Merkmalen ist aus der US 2006/0208601 A1 bekannt. Dabei sind in einem Statorgehäuse in axialer Abfolge drei Spuleneinheiten untergebracht, die jeweils zwei identische Polscheiben und eine Ringspule aufweisen. Dabei sind an jeder Polscheibe an dem jeweiligen ringförmigen, axial vorspringenden Ansatz im Winkel zueinander ein Vorsprung und eine Ausnehmung vorgesehen. Diese korrespondieren zueinander und greifen ineinander, um bei der Montage der Spuleneinheit eine bestimmte Stellung der beiden Polscheiben zueinander zu definieren. An den Polscheiben ist jeweils eine Nut für einen Spulenwicklungsanschluss ausgeführt, die im Bereich des ringförmigen Ansatzes in einer Aussparung endet. Zur korrekten Justierung zweier benachbarter Spuleneinheiten zueinander können die Polscheiben jeweils einen stirnseitig vorspringenden Vorsprung aufweisen, der in eine korrespondierende Ausnehmung der angrenzenden Polscheibe der benachbarten Spuleneinheit eingreift.

Die vorliegende Erfindung ist darauf gerichtet, eine einen Stator und einen Rotor umfassende mehrphasige dynamoelektrische Maschine der Klauenpolbauart bereitzustellen, die sich durch einen vergleichsweise einfachen strukturellen Aufbau, ein besonders geringes Gewicht, die Möglichkeit einer einfachen Montage und eine selbst gegenüber Klauenpolmaschinen nach dem Stand der Technik besondere Kompaktheit auszeichnet.

Gelöst wird diese Aufgabenstellung gemäß der vorliegenden Erfindung, indem bei einer mehrphasigen dynamoelektrischen Maschine der Klauenpolbauart mit den im Oberbegriff des Anspruchs 1 angegebenen Merkmalen weiterhin die den Anspruch 1 kennzeichnenden Merkmale vorgesehen sind. Demgemäß zeichnet sich die einen Stator und einen bezüglich einer Rotationsachse drehbar gelagerten Rotor aufweisende mehrphasige dynamoelektrische Maschine der Klauenpolbauart erfindungsgemäß durch die nachstehend angegebenen, miteinander in einem funktionalen Zusammenhang stehenden und synergetisch zusammenwirkenden Merkmale aus:
Der Stator umfasst eine Spulenanordnung mit einer Mehrzahl von Spuleneinheiten.
Jede Spuleneinheit umfasst jeweils mindestens eine zwischen zwei zugeordneten Polscheiben angeordnete, die Rotationsachse umgebende Ringspule.
Die beiden Polscheiben jeder Spuleneinheit weisen die Ringspule an deren dem Rotor zugewandten Umfang alternierend umgreifende Klauen auf.
Der Rotor weist einen sich über die axiale Länge der Spulenanordnung erstreckenden Zylinderabschnitt mit auf dessen dem Stator zugewandter Oberfläche angeordneten Permanentmagneten auf.
Sämtliche Polscheiben sind identisch und weisen an ihrem dem Rotor abgewandten Umfang axial vorspringende Ansätze auf.
Die beiden Polscheiben jeder Spuleneinheit liegen im Bereich der Stirnseiten der Ansätze unmittelbar aneinander an.
Die einander gegenüberliegenden Polscheiben zweier einander benachbarter Spuleneinheiten liegen unmittelbar aneinander an.
Die Polscheiben weisen im Bereich der Ansätze formschlüssig ineinander greifende, durch eine Abfolge von axialen Vorsprüngen und Ausnehmungen gebildete erste Verzahnungen auf.
Im Bereich der ersten Verzahnungen der beiden Polscheiben jeder Spuleneinheit besteht mindestens ein Durchbruch für einen Spulenwicklungsanschluss, wobei die beiden betreffenden Polscheiben im Übrigen im Bereich der ersten Verzahnungen eine geschlossene Oberfläche definieren.
Jeweils mindestens einer der Vorsprünge jeder ersten Verzahnung ist in Umfangsrichtung kürzer als die übrigen Vorsprünge.

So ist im Rahmen der vorliegenden Erfindung im funktionalen Zusammenwirken mit den weiteren Merkmalen insbesondere bedeutsam, dass die beiden Polscheiben jeder der Spuleneinheiten im Bereich von - bevorzugt ringförmigen - Ansätzen, die bei Außenrotormaschinen typischerweise radial innen und bei Innenrotormaschinen typischerweise radial außen an den Polscheiben vorgesehen sind, unmittelbar aneinander anliegen, wobei die Polscheiben im Bereich der Ansätze formschlüssig ineinander greifende, durch eine Abfolge von axialen Vorsprüngen und Ausnehmungen gebildete erste Verzahnungen aufweisen, und dass weiterhin auch die einander gegenüberliegenden Polscheiben zweier einander benachbarter Spuleneinheiten unmittelbar aneinander anliegen. Dies trägt in mehrfacher Hinsicht dazu bei, die oben angegebene Aufgabenstellung zu lösen. So ergibt sich zum einen eine aus der Abfolge von aneinander anliegenden Polscheiben gebildete, sich in axialer Richtung durchgehend erstreckende Struktur, die als tragende Struktur der mehrphasigen Klauenpolmaschine genutzt werden oder zumindest eine gesonderte tragende Struktur statisch unterstützen bzw. entlasten kann. Infolgedessen kann, je nach der spezifischen Ausführung, eine gesonderte tragende Struktur der Klauenpolmaschine schwächer dimensioniert werden oder ggf. sogar ganz entfallen. Dies wirkt sich nicht nur im Sinne eines geringeren baulichen Aufwands sowie eines reduzierten Gewichts der erfindungsgemäßen mehrphasigen Klauenpolmaschine, verglichen mit hinsichtlich der Leistung vergleichbaren Klauenpolmaschinen nach dem Stand der Technik aus; vielmehr wird hierdurch auch eine besonders kompakte Bauweise der Klauenpolmaschine ermöglicht. Die besagten ersten Verzahnungen, die durch eine Abfolge von axialen Vorsprüngen und Ausnehmungen gebildet sind, unterstützen bzw. bewirken dabei die lagerichtige Positionierung der beiden Polscheiben der Spuleneinheiten, so dass für die Lagesicherung idealerweise weitere, gesonderte Mittel entbehrlich sind, was sowohl einer Montage der erfindungsgemäßen Klauenpolmaschine mit geringem Aufwand als auch der dauerhaft zuverlässigen Lagesicherung der Polscheiben entgegenkommt. Die Vorsprünge und Ausnehmungen der ineinandergreifenden ersten Verzahnungen bilden dabei eine unmittelbare Abfolge über den gesamten Umfang des jeweiligen axialen Ansatzes, d.h. einem Vorsprung folgt unmittelbar eine Ausnehmung, in welche ein korrespondierender Vorsprung der jeweils anderen Polscheibe eingreift. Hinzu kommt, dass sich die erfindungsgemäße Ausführung der einzelnen Spuleneinheiten und deren Zusammenbau zu einer besonders kompakten Spulenanordnung auch hinsichtlich des magnetischen Flusses und dessen Verteilung günstig auswirken, womit sich ein hoher Wirkungsgrad, eine hohe Leistungsausbeute und eine hohe Leistungsdichte erreichen lassen, was wiederum, gemessen an der Leistung, besonders kompakte mehrphasige Klauenpolmaschinen ermöglicht. Durch die besagten axialen Ansätze lässt sich weiterhin eine Umlenkung des magnetischen Flusses im Bereich des Übergangs von der axialen Erstreckung der Flusslinien - je nach Bauweise - radial innerhalb bzw. außerhalb der Ringspule in den Bereich der radialen Erstreckung seitlich der Ringspule ohne irgendeine Grenzfläche oder sonstige Unstetigkeit erreichen. Wiederum wirkt sich die besonders homogene Flusslinienverteilung günstig auf die Leistung sowie die sonstigen Betriebseigenschaften der dynamoelektrischen Maschine aus. Vor dem gleichen Hintergrund ist es besonders günstig, dass die beiden Polscheiben jeder Spuleneinheit im Bereich der besagten, je nach Bauweise radial innen oder radial außen die Ringspule axial überlappenden, bevorzugt ringförmigen axialen Ansätze längs einer ringförmigen Stirnfläche direkt aneinander anliegen; denn hierdurch ergibt sich ein magnetischer Fluss innerhalb der Polstruktur der Spuleneinheit mit nur einer einzigen Trennfläche und ohne jeglichen Materialwechsel. Das Resultat ist wiederum eine Optimierung von Betriebsverhalten, Betriebseigenschaften und Leistung der dynamoelektrischen Maschine. Einem vergleichsweise geringen baulichen Aufwand kommt dabei weiterhin entgegen, dass sämtliche Polscheiben identisch ausgeführt sind. Gemäß einem weiteren besonderen Aspekt der vorliegenden Erfindung ist zumindest einer der Vorsprünge der ersten Verzahnung jeder Polscheibe (in Umfangsrichtung) kürzer bzw. schmaler und eine der beiden benachbarten Ausnehmungen dementsprechend (in Umfangsrichtung) länger bzw. breiter ausgeführt. Hierdurch entsteht im Bereich der ineinandergreifenden ersten Verzahnungen der beiden Polscheiben jeder Spuleneinheit, nämlich zwischen den beiden nebeneinander angeordneten schmaleren Vorsprüngen der ineinandergreifenden ersten Verzahnungen mindestens ein Durchbruch für einen Spulenwicklungsanschluss, wobei die beiden betreffenden Polscheiben im Übrigen, wie weiter oben dargelegt, im Bereich der ineinandergreifenden ersten Verzahnungen eine geschlossene Umfangsfläche definieren.

Aus den vorstehenden Erläuterungen der vorliegenden Erfindung ist ersichtlich, dass in Verbindung mit den weiteren für die erfindungsgemäße dynamoelektrische Maschine charakteristischen Merkmalen insbesondere gewissermaßen die unmittelbare axiale Hintereinanderschaltung der einzelnen Spuleneinheiten der Spulenanordnung von besonderer Bedeutung ist. Erkennbar schließt dies nicht aus, dass im Rahmen der vorliegenden Erfindung zumindest jene Flächen der Polscheiben, an denen zwei einander benachbarte Spuleneinheiten aneinander anliegen, mit einem Flusssperr-Material beschichtet bzw. überzogen sind, welches die wechselseitige Beeinflussung des innerhalb der betreffenden Spuleneinheiten bestehenden magnetischen Flusses reduziert bzw. sogar mehr oder weniger unterbindet. In diesem Zusammenhang ist im Übrigen darauf hinzuweisen, dass eine vollflächige Anlage zweier einander benachbarter Spuleneinheiten im Bereich der einander gegenüberstehenden Polscheiben im allgemeinen nicht günstig und daher nicht vorgesehen, schon gar nicht zwingend ist; vielmehr ist im allgemeinen von Vorteil, wenn die einander gegenüberstehenden Polscheiben zweier einander benachbarter Spuleneinheiten nur in einem räumlich beschränkten Bereich aneinander anliegen, besonders bevorzugt entfernt von dem Rotor, wobei außerhalb des Bereichs der Anlage zwischen den Spuleneinheiten vorteilhafterweise ein Abstand in Form eines Spalts besteht.

Im Hinblick auf die zueinander lagerichtige Positionierung der beiden Polscheiben jeder Spuleneinheit zueinander und die Verwendung zweier identischer Polscheiben an jeder Spuleneinheit ist es besonders günstig, wenn der Winkel zwischen einer Kante eines Vorsprungs der ersten Verzahnung und dem Zentrum der nächstliegenden Klaue 360°:2n beträgt, wobei n die Anzahl der Pole (Klauen pro Spuleneinheit) bezeichnet. Werden die beiden Polscheiben der jeweiligen Spuleneinheit - unter Eingriff der beiden zugeordneten ersten Verzahnungen - dergestalt zusammengefügt, dass jeweils die besagten Kanten der beiden Polscheiben aneinander anliegen, so sind die beiden Polscheiben ohne weiteres so zueinander justiert, dass ihre Klauen wechselweise gleich beabstandet sind. Nur der Vollständigkeit halber ist in diesem Zusammenhang darauf hinzuweisen, dass die Kanten der die erste Verzahnung definierenden Vorsprünge und Ausnehmungen keineswegs zwingend axial ausgerichtet sein müssen; vielmehr kommt auch eine Schrägstellung der besagten Kanten dergestalt in Betracht, dass die Vorsprünge im Wesentlichen keil- oder trapezförmig ausgeführt sind.

Die erste Verzahnung beider Polscheiben kann dabei in bevorzugter Weiterbildung der Erfindung in dem Sinne gleichmäßig sein, dass - nach Maßgabe der in Anspruch 1 definierten Abweichung - sämtliche Vorsprünge und Ausnehmungen das selbe Maß in Umfangsrichtung aufweisen (z.B. sich über einen Winkel von 45° erstrecken); denn hierdurch definieren die beiden Polscheiben jeder Spuleneinheit (bei Innenrotormaschinen) im Bereich der ineinandergreifenden ersten Verzahnungen - abgesehen von dem mindestens einen Durchbruch für den Spulenwicklungsanschluss - eine geschlossene äußere Umfangsfläche, was die Ausbildung einer gehäuseartigen Struktur durch die Polscheiben begünstigt.

Was die geometrische Gestaltung der axial vorspringenden Ansätze der Polscheiben betrifft, so zeichnet sich eine andere bevorzugte Weiterbildung der Erfindung dadurch aus, dass die axiale Erstreckung der Vorsprünge der ersten Verzahnungen maximal ist, d.h. die axiale Erstreckung der axial vorspringenden Ansätze der Polscheiben im Bereich der Ausnehmungen gegen Null geht, vernachlässigbar klein ist oder sogar gleich Null ist. Im zuletzt genannten Fall bestehen die axial vorspringenden Ansätze der Polscheiben effektiv allein aus - in Umfangsrichtung zueinander beabstandeten - einzelnen Vorsprüngen, die bei den paarweise zusammenwirkenden Polscheiben jeder Spuleneinheit wechselweise ineinandergreifen, so dass die Vorsprünge stirnseitig gewissermaßen an einem Scheibenabschnitt der jeweils anderen Polscheibe anliegen. Dies trägt zu einer vereinfachten Herstellung der Polscheiben bei, weil sich auf diese Weise die Anzahl der axialen Ebenen des Bauteils (und somit auch der zu dessen Herstellung verwendeten Form) minimieren lässt. Auch lässt sich hierdurch eine maximale axiale Erstreckung der Durchbrüche für die Spulenwicklungsanschlüsse erreichen, so dass insbesondere im Bereich der Durchbrüche noch dem Schutz der Spulenwicklungsanschlüsse dienende Einsätze einbringen lassen. Gemäß einer bevorzugten Weiterbildung der Erfindung ist vorgesehen, dass die einander gegenüberliegenden Polscheiben zweier einander benachbarter Spuleneinheiten im Bereich von durch eine Abfolge von axialen Vorsprüngen und Ausnehmungen gebildeten zweiten Verzahnungen formschlüssig ineinander greifen. Die besagten zweiten Verzahnungen unterstützen bzw. bewirken dabei die lagerichtige, den vorgegebenen Phasenwinkel berücksichtigende Positionierung der einzelnen Spuleneinheiten zueinander, so dass für die Lagesicherung idealerweise weitere, gesonderte Mittel entbehrlich sind, was wiederum sowohl einer Montage der erfindungsgemäßen Klauenpolmaschine mit geringem Aufwand als auch der dauerhaft zuverlässigen phasenrichtigen Lagesicherung der Spuleneinheiten entgegenkommt. Im Hinblick auf die zueinander lagerichtige Positionierung der jeweiligen beiden Spuleneinheiten zueinander und die Verwendung identischer Polscheiben an sämtlichen Spuleneinheiten ist es besonders günstig, wenn der Winkel zwischen einer Kante eines Vorsprungs der zweiten Verzahnung und dem Zentrum der nächstliegenden Klaue dem Betrag des Terms (360°: (n·p) - 180°:n) entspricht, wobei n die Anzahl der Pole (Klauen pro Spuleneinheit) bezeichnet und p die Anzahl der Phasen der Spulenanordnung. Werden die jeweils zwei Spuleneinheiten - unter Eingriff der beiden zugeordneten zweiten Verzahnungen - dergestalt zusammengefügt, dass jeweils die besagten spezifischen Kanten der einander zugeordneten Polscheiben der beiden Spuleneinheiten aneinander anliegen, so sind die beiden Spuleneinheiten ohne weiteres lagerichtig mit dem vorgegebenen Phasenwinkel zueinander justiert. Auch die Kanten der die zweiten Verzahnungen definierenden Vorsprünge und Ausnehmungen müssen keineswegs zwingend axial ausgerichtet sein, sonder können vielmehr ggf. auch dergestalt schräggestellt sein, dass die Vorsprünge im Wesentlichen keil- oder trapezförmig ausgeführt sind.

Bevorzugt entspricht die Anzahl der Vorsprünge der zweiten Verzahnungen der Anzahl der Klauen pro Polscheibe. Dies gestattet, dass die einander benachbarten Spuleneinheiten in mehreren Stellungen lage- und phasenrichtig zueinander montiert bzw. zusammengefügt werden können, was den Montageaufwand verringert und die Flexibilität erhöht, beispielweise hinsichtlich der Anordnung der vorstehend beschriebenen Durchbrüche für die Wicklungsanschlüsse.

Auch im Bereich der ineinandergreifenden zweiten Verzahnungen besteht gemäß einer wiederum bevorzugten Weiterbildung der Erfindung eine geschlossene Umfangsfläche, indem die zweiten Verzahnungen der Polscheiben in dem Sinne gleichmäßig sind, dass sämtliche Vorsprünge und Ausnehmungen das selbe Maß in Umfangsrichtung aufweisen (z.B. 45°). Auch dies ist wiederum insbesondere von Vorteil bei Innenrotormaschinen, da es die Ausbildung einer gehäuseartigen Struktur durch die Polscheiben begünstigt.

Wenngleich die vorstehend erläuterten Vorteile der erfindungsgemäßen dynamoelektrischen Maschinen in besonderer Weise bei Klauenpol-Innenrotormotoren und anderen dynamoelektrischen Innenrotormaschinen der Klauenpolbauart zum Tragen kommen, ist die vorliegende Erfindung grundsätzlich in gleicher Weise auf Innenrotormaschinen wie auch Außenrotormaschinen anwendbar. Bei beiden Bauarten ist, nach einer wiederum anderen bevorzugten Weiterbildung der Erfindung, der Innenrotor beidseitig außerhalb der Spulenanordnung gelagert. Im Sinne der vorstehenden Erläuterungen kann sich dabei eine bevorzugte Weiterbildung der erfindungsgemäßen dynamoelektrischen Maschine dadurch auszeichnen, dass sie als Außenstator-Maschine ausgeführt ist, wobei die Polscheiben unter Verzicht auf eine sie umgebende gesonderte Gehäusestruktur einen Teil des Maschinengehäuses bilden. Das Maschinengehäuse kann dabei insbesondere weiterhin zwei endseitige Deckel umfassen. Diese weisen bevorzugt jeweils eine zu den zweiten Verzahnungen der Polscheiben korrespondierende Verzahnung auf, so dass sie auf einfache Weise formschlüssig lagegesichert und in einer definierten relativen Stellung zu den angrenzenden Polscheiben mit der aus den Polscheiben gebildeten Struktur zusammengefügt werden können. Besonders bevorzugt weisen die Deckel jeweils eine Rotorlagerung auf, so dass der Rotor beidseits der Spulenanordnung gelagert ist. Weiterhin kann vorteilhafterweise mindestens ein Deckel eine Montageanordnung, insbesondere einen Montageflansch, mindestens einen Montageansatz und/oder mindestens einen Montagevorsprung aufweisen. Die Polscheiben können, müssen indessen nicht zwingend als einstückige Bauteile ausgeführt sein. Vielmehr kommt auch in Betracht, dass sie aus mehreren - bevorzugt identischen - Segmenten zusammengefügt sind.

Im Folgenden wir die vorliegende Erfindung anhand zweier in der Zeichnung veranschaulichter bevorzugter Ausführungsbeispiele näher erläutert. Dabei zeigt
- Fig. 1: in perspektivischer Ansicht eine Polscheibe eines nach der Erfindung ausgeführten Innenrotor-Klauenpolmotors,
- Fig. 2: eine zwei Polscheiben nach Fig. 1 und eine zwischen diesen aufgenommene Ringspule umfassende Spuleneinheit, ebenfalls in perspektivischer Ansicht,
- Fig. 3: die Spuleneinheit nach Fig. 2 in geschnittener perspektivischer Darstellung,
- Fig. 4: eine drei Spuleneinheiten nach den Fig. 2 und 3 umfassende Spulenanordnung, wiederum in perspektivischer Ansicht,
- Fig. 5: die Spulenanordnung nach Fig. 4 in geschnittener perspektivischer Darstellung,
- Fig. 6: in Draufsicht die Polscheibe nach Fig. 1 von der Spulenseite her und
- Fig. 7: in Draufsicht die Polscheibe nach Fig. 1 von der Außenseite her; weiterhin zeigt
- Fig. 8: in geschnittener perspektivischer Darstellung die Spulenanordnung und den Rotor eines als dreiphasigen Außenrotor-Klauenpolmotor ausge- führten zweiten Ausführungsbeispiels der Erfindung,
- Fig. 9: in perspektivischer Ansicht eine gegenüber der Ausführungsform nach Fig. 1 abgewandelte Polscheibe eines nach der Erfindung ausgeführten Innenrotor-Klauenpolmotors und
- Fig. 10: die unter Verwendung von sechs Polscheiben gemäß Fig. 9 hergestellte, dementsprechend gegenüber Fig. 5 abgewandelte Spulenanordnung.

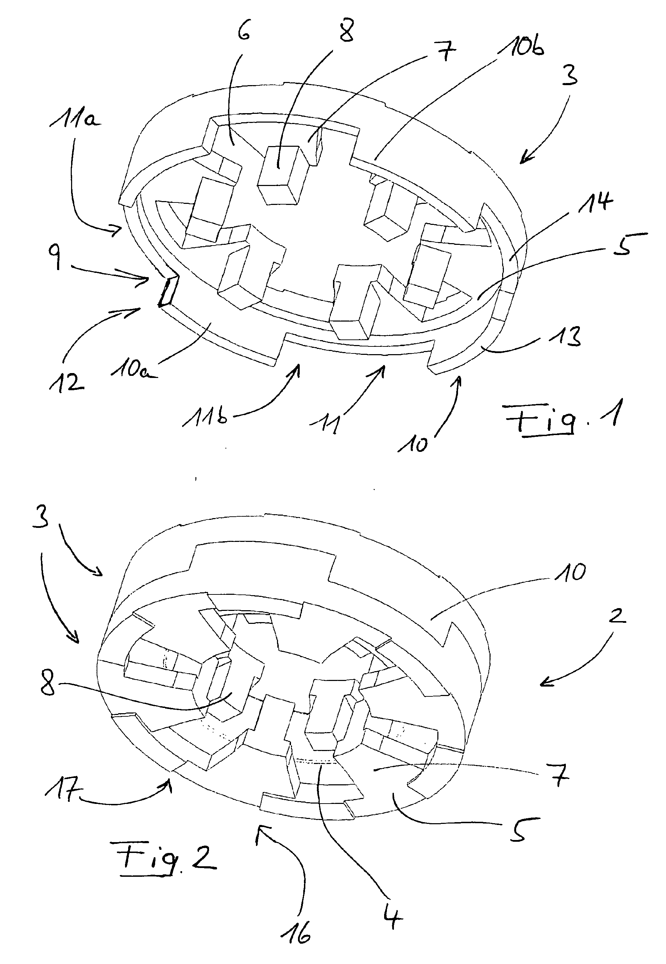

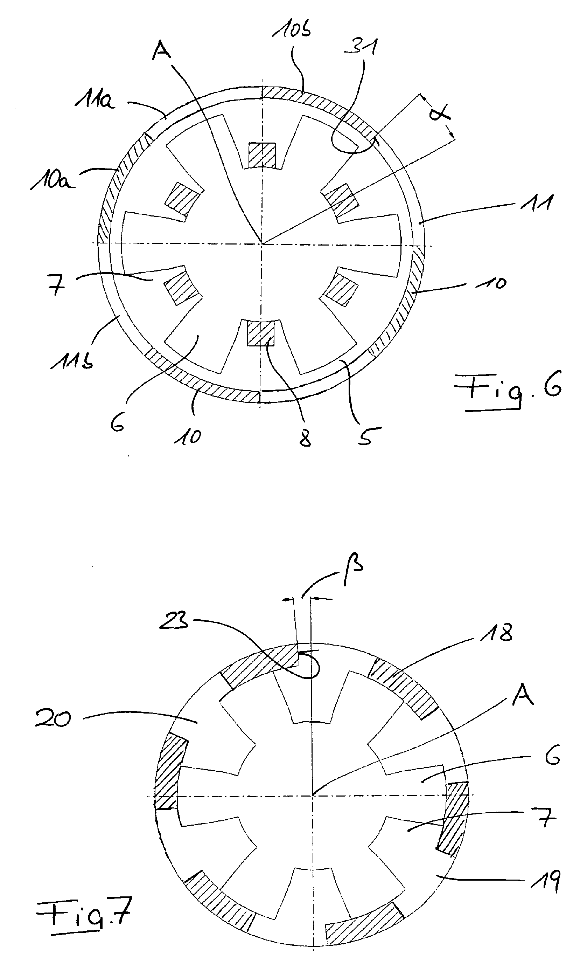

Die Fig. 1 bis 7 veranschaulichen in dem Umfang, wie dies für das Verständnis der vorliegenden Erfindung zweckmäßig ist, als erstes Ausführungsbeispiel einen dreiphasigen Innenrotor-Klauenpolmotor mit Außenstator. Dabei umfasst die einen - in bekannter Weise auf seiner äußeren zylindrischen Umfangsfläche mit Permanentmagneten bestückten, um die Motor- bzw. Rotationsachse A drehbaren - (nicht gezeigten) Rotor umgebende, einen Teil des Stators bildende Spulenanordnung 1 drei Spuleneinheiten 2, die ihrerseits jeweils im Wesentlichen aus zwei Polscheiben 3 und einer die Rotationsachse A umgebenden Ringspule 4 bestehen. Die beiden - aus SMC (Soft Magnetic Composit) bestehenden - Polscheiben 3 jeder Spuleneinheit 2 sind identisch aufgebaut. Sie umfassen jeweils einen sich senkrecht zu der Motorachse A erstreckenden Scheibenabschnitt 5. An diesem sind durch entsprechende Einschnitte 6 sechs Zähne 7 ausgebildet, die sich in Richtung auf die Motorachse A hin im Wesentlichen keilförmig verjüngen. Von jedem Zahn 7 springt radial innen in axialer Richtung eine im Wesentlichen quaderförmig ausgeführte Klaue 8 vor. Die Klauen 8 der beiden Polscheiben 3 jeder Spuleneinheit umgreifen alternierend die Ringspule 4 an ihrem dem Rotor zugewandten Umfang, d.h. bei dem hier vorliegenden Innenrotor-Motor den inneren Umfang der Ringspule.

Radial außen weisen die Polscheiben 3 axial - in gleicher Richtung wie die Klauen 8 - vorspringende ringförmige Ansätze 9 auf. Die ringförmigen Ansätze 9 weisen jeweils eine durch die Abfolge von axialen Vorsprüngen 10 und Ausnehmungen 11 gebildete erste Verzahnung 12 auf. Die beiden Polscheiben 3 jeder Spuleneinheit 2 liegen - bei formschlüssig ineinandergreifenden ersten Verzahnungen 12 - in dem Sinne im Bereich der Stirnseiten der ringförmigen Ansätze 9 unmittelbar aneinander an, als jeweils die Stirnfläche 13 eines Vorsprungs 10 der einen Polscheibe an der Stirnfläche 14 einer Ausnehmung 11 der anderen Polscheibe anliegt.

Erstrecken sich bei vier Vorsprüngen 10 und vier Ausnehmungen 11 pro Polscheibe 3 sowohl die Vorsprünge 10 als auch die Ausnehmungen 11 jeweils über einen Winkelbereich von 45°, so ergibt sich bei den aus zwei solchen Polscheiben 3 zusammengefügten Spuleneinheiten 2 eine vollständig geschlossene äußere zylindrische Ober- bzw. Umfangsfläche. Allerdings ist einer der vier Vorsprünge 10 jeder Polscheibe 3, nämlich der Vorsprung 10a in Umfangsrichtung etwas kürzer ausgeführt als die drei übrigen Vorsprünge 10b, und zwar einseitig, so dass die benachbarte Ausnehmung 11a um das entsprechende Maß in Umfangsrichtung länger ist als die drei verbleibenden Ausnehmungen 11b. Die beiden Polscheiben 3 sind jeweils dergestalt - um die Ringspule 4 herum - zu der Spuleneinheit 2 zusammengefügt, dass jeweils der verkürzte Vorsprung 10a der ersten Verzahnung 12 der einen Polscheibe in die verlängerte Ausnehmung 11a der ersten Verzahnung 12 der anderen Polscheibe 3 eingreift. Hierdurch entsteht im Bereich der beiden ineinandergreifenden ersten Verzahnungen 12 der beiden Polscheiben 3 jeder Spuleneinheit 2 ein Durchbruch 15 für einen Spulenwicklungsanschluss 30. Abgesehen von jenem Durchbruch 15 definieren die beiden betreffenden Polscheiben 3 im Bereich der ineinandergreifenden ersten Verzahnungen 12 aber eine geschlossene Oberfläche.

Der Winkel α zwischen einer Kante 31 eines (normalen) Vorsprungs 10b der ersten Verzahnung 12 und dem Zentrum der nächstliegenden Klaue 8 beträgt nach der Bemessungsregel 360°:2n, wobei n die Anzahl der Pole, d.h. die Anzahl der Klauen 8 pro Spuleneinheit 2 angibt, 15°. Auf diese Weise ist bei einem formschlüssigen Ineinandergreifen der beiden ersten Verzahnungen 12 dergestalt, dass die beiden entsprechenden Kanten 15 der beiden Polscheiben 3 aneinander anliegen, sichergestellt, dass die Klauen 8 der beiden Polscheiben einheitliche Abstände zueinander einhalten.

Bei der Spulenanordnung 1 liegen im Übrigen auch die einzelnen Spulenanordnungen 2 in dem Sinne unmittelbar aneinander an, dass die einander gegenüberliegenden Polscheiben 3 zweier einander benachbarter Spuleneinheiten 2 aneinander anliegen. An den äußeren Stirnseiten der 16 Polscheiben 3 sind radial außen zweite Verzahnungen 17 ausgeführt, indem dort sechs Vorsprünge 18 axial von dem jeweiligen Scheibenabschnitt 5 vorspringen. Zwischen jeweils zwei benachbarten Vorsprüngen 18 der zweiten Verzahnungen 17 bestehen korrespondierende Ausnehmungen 19, wobei diese vorliegend bündig sind mit der durch die Stirnfläche 20 des Scheibenabschnitts 5 definierten Ebene. Bei zu einer Spulenanordnung 1 zusammengefügten Spuleneinheiten 2 greifen die beiden jeweils einander zugeordneten zweiten Verzahnungen 17 formschlüssig ineinander ein. Dabei liegt jeweils die Stirnfläche 21 eines Vorsprungs 18 der einen Polscheibe 3 im Bereich der korrespondierenden Ausnehmung 19 der anderen Polscheibe 3 an deren Stirnfläche 20 an. Entsprechend der axialen Höhe der Vorsprünge 18 bildet sich dabei zwischen den Stirnflächen 20 der beiden jeweils zugeordneten Polscheiben 3 und somit auch zwischen den Zähnen 7 ein axialer Spalt 22 aus.

Indem sich bei sechs Vorsprüngen 18 und sechs Ausnehmungen 19 pro Polscheibe 3 sowohl die Vorsprünge 18 als auch die Ausnehmungen 19 jeweils über einen Winkelbereich von 30° erstrecken, ergibt sich jeweils im Bereich des Übergangs zwischen zwei benachbarten Spuleneinheiten 2 der Spulenanordnung 1 eine vollständig geschlossene äußere zylindrische Ober- bzw. Umfangsfläche.

Im Hinblick auf eine lagerichtige, den vorgegebenen Phasenwinkel berücksichtigenden Positionierung der einzelnen aneinander anliegenden Spuleneinheiten 2 zueinander beträgt der Winkel β zwischen einer Kante 23 eines Vorsprungs 18 der zweiten Verzahnung 17 und dem Zentrum der nächstliegenden Klaue 8 5°, entsprechend der Bemessungsregel, gemäß derer sich der Winkel β ergibt als der Betrag des Terms (360°:(n.p) - 180°:n), wobei n die Anzahl der Pole (Klauen pro Spulenanordnung) und p die Anzahl der Phasen der Spulenanordnung 1, d.h. typischerweise die Anzahl der Spuleneinheiten der Spulenanordnung bezeichnet.

Durch die formschlüssige Hintereinanderschaltung der insgesamt sechs, durchgehend aneinander anliegenden, eine geschlossene Oberfläche bildenden Polscheiben 3 der drei Spuleneinheiten 2 bildet die Spulenanordnung 1 bzw. bilden die Polscheiben 3 - unter Verzicht auf eine sie umgebende gesonderte Gehäusestruktur - einen Teil des Motorgehäuses. Stirnseitig wird der durch die sechs Polscheiben 3 gebildete zylindrische Gehäuseabschnitt 24 durch zwei (nicht gezeigte) endseitige Deckel verschlossen. Jeder der beiden Deckel umfasst ein Rotorlager, so dass der Rotor beidseits unmittelbar benachbart der Spulenanordnung 1 gelagert ist. Die beiden Deckel umfassen jeweils eine zu den zweiten Verzahnungen 17 der Polscheiben 3 korrespondierende Verzahnung, so dass sie formschlüssig mit den endseitigen Polscheiben zusammengefügt werden können. Durch Zuganker, welche sich von dem einen zu dem anderen Deckel erstrecken, wird der aus den drei Spuleneinheiten 2 bestehende Block zwischen den beiden Deckeln verspannt. An den Deckeln sind dabei auch Montageanordnungen in Form von Montageflanschen vorgesehen.

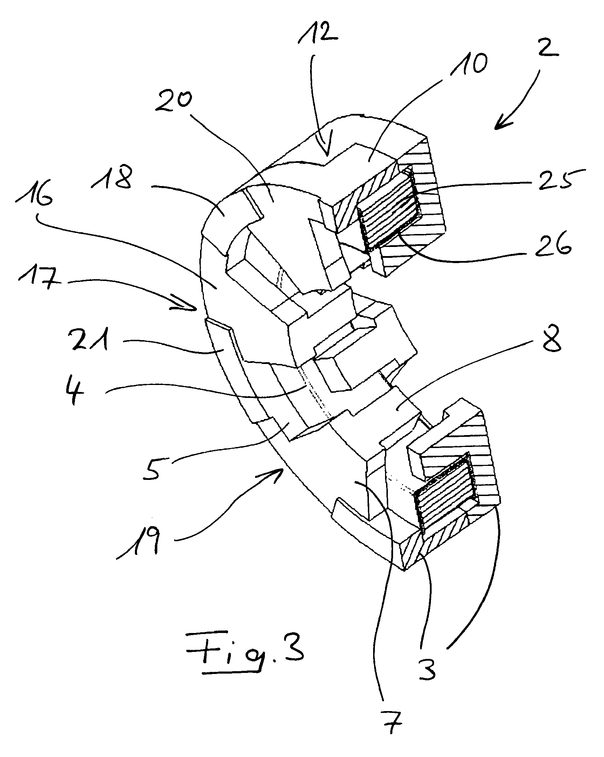

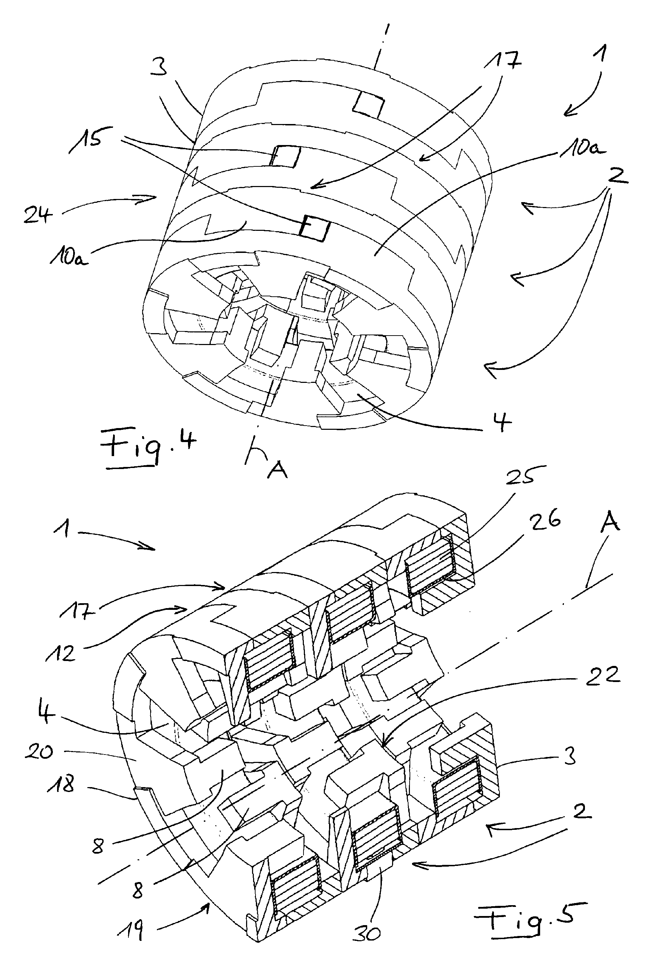

In den Fig. 3 und 5 ist im Übrigen erkennbar, dass die Ringspulen 5, wie gezeigt, jeweils aus einer aus einem flachen Bandmaterial hergestellten Wicklung 25 bestehen können, die in einem ringförmigen Käfig 26 aufgenommen ist, der eine U-förmigen, nach außen offenen Querschnitt aufweist. Alternativ sind erkennbar auch diverse andere Querschnitte des Wicklungsmaterials denkbar.

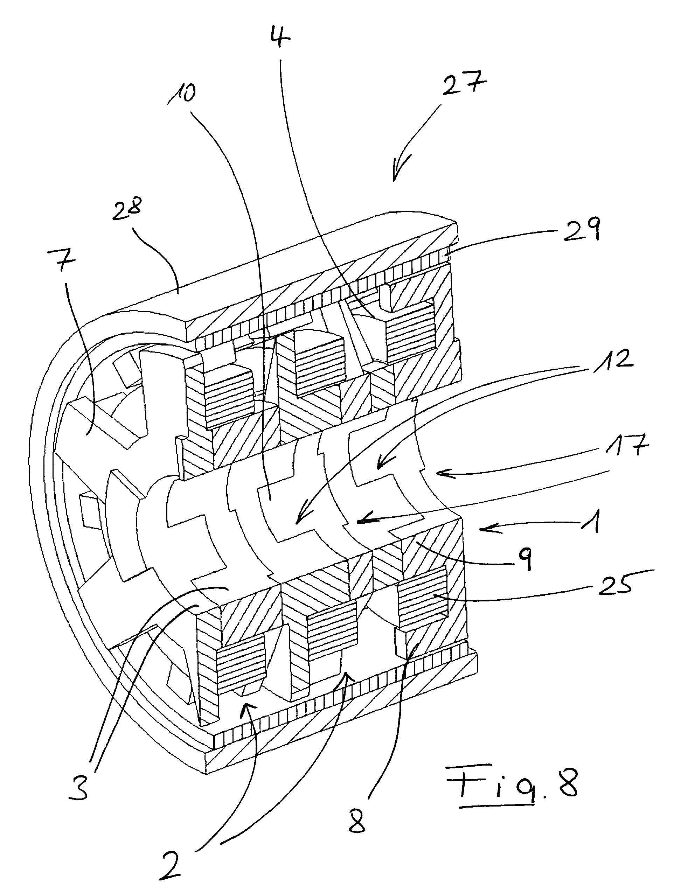

Das in Fig. 8 veranschaulichte, einen dreiphasigen Außenrotor-Klauenpolmotor mit Innenstator betreffende zweite Ausführungsbeispiel erschließt sich dem Fachmann ohne weiteres aus den vorstehenden Erläuterungen des ersten Ausführungsbeispiels, auf die zur Vermeidung von Wiederholungen verwiesen wird. Gezeigt ist in Fig. 8 in Ergänzung zu der wiederum drei Spuleneinheiten 2 umfassenden Spulenanordnung 1 auch der Rotor 27. Dieser umfasst, in als solches bekannter Weise, einen zylindrischen Mantelabschnitt 28, an dessen Innenumfang eine Abfolge von Permanentmagneten 29 angeordnet ist. Diese stehen mit einem geringen Spaltabstand den Klauen 8 der Spulenanordnung gegenüber. Die Ringspulen 4 sitzen bei dieser Ausführungsform radial außen auf den ringförmigen Ansätzen 9 der beiden jeweils zugeordneten Polscheiben 3 auf, wobei die beiden Polscheiben 3 jeder Spuleneinheit 2 im Bereich jener - wiederum ineinandergreifende erste Verzahnungen 12 ausbildenden - Ansätze 9 aneinander anliegen.

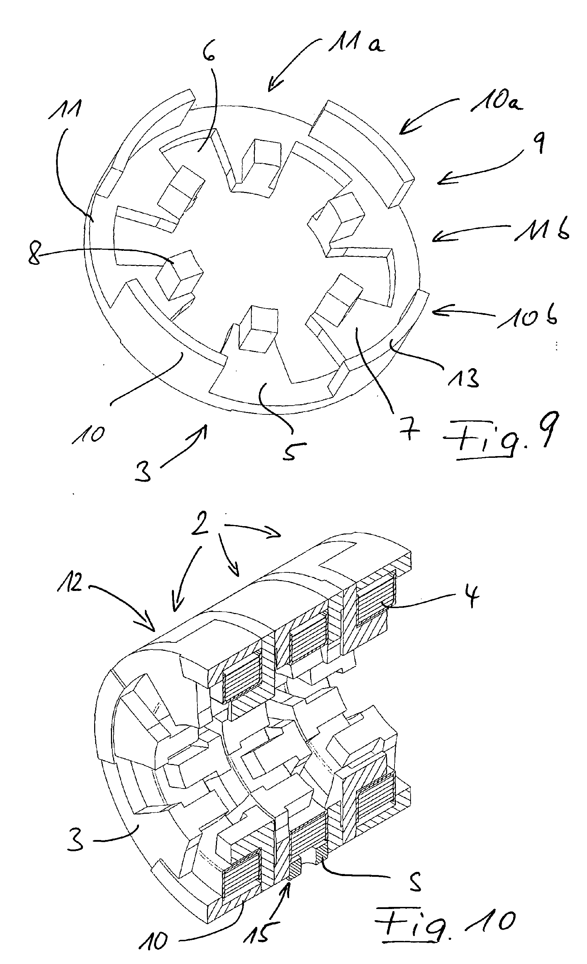

Die Polscheibe 3 nach Fig. 9 unterscheidet sich von derjenigen nach Fig. 1 im Wesentlichen allein durch die geometrische Gestaltung der axial vorspringenden Ansätze 9. Diese sind nicht durchgehend ringförmig. Vielmehr bestehen die axial vorspringenden Ansätze 9 der Polscheiben 3 hier effektiv allein aus - in Umfangsrichtung zueinander beabstandeten - einzelnen Vorsprüngen 10, die bei den paarweise zusammenwirkenden Polscheiben jeder Spuleneinheit wechselweise ineinandergreifen, so dass die Vorsprünge stirnseitig gewissermaßen an einem Scheibenabschnitt 5 der jeweils anderen Polscheibe anliegen (vgl. Fig. 10). Hierdurch weisen die Vorsprünge 10 der ersten Verzahnungen 12 eine maximal mögliche axiale Erstreckung auf. Dabei ist wiederum, zugunsten der betreffenden benachbarten Ausnehmung 11a, der Vorsprung 10a in Umfangsrichtung kürzer als die drei anderen Vorsprünge 10b, so dass zwischen zwei benachbarten Vorsprüngen der beiden Polscheiben 3 jeder Spuleneinheit 2 ein Durchbruch 15 gebildet wird, der in diesem Falle ebenfalls eine maximale axiale Erstreckung aufweist, so dass in die Durchbrüche 15 jeweils noch ein Schutzeinsatz S einsetzbar ist (vgl. Fig. 10).

## Patentansprüche

1. Mehrphasige dynamoelektrische Maschine der Klauenpolbauart, insbesondere Mehrphasen-Klauenpolmotor, mit einem Stator und einem bezüglich einer Rotationsachse drehbar gelagerten Rotor (27), mit den folgenden Merkmalen:
- der Stator umfasst eine Spulenanordnung (1) mit einer Mehrzahl von Spuleneinheiten (2);
- jede Spuleneinheit (2) umfasst jeweils mindestens eine zwischen zwei zugeordneten Polscheiben (3) angeordnete, die Rotationsachse (A) umgebende Ringspule (4);
- die beiden Polscheiben (3) jeder Spuleneinheit (2) weisen die Ringspule (4) an deren dem Rotor (27) zugewandten Umfang alternierend umgreifende Klauen (8) auf;
- der Rotor (27) weist einen sich über die axiale Länge der Spulenanordnung (1) erstreckenden Zylinderabschnitt mit auf dessen dem Stator zugewandter Oberfläche angeordneten Permanentmagneten (29) auf;
- sämtliche Polscheiben (3) sind identisch und weisen an ihrem dem Rotor (27) abgewandten Umfang axial vorspringende Ansätze (9) auf;
- die beiden Polscheiben (3) jeder Spuleneinheit (2) liegen im Bereich der Stirnseiten der Ansätze (9) unmittelbar aneinander an;
- die einander gegenüberliegenden Polscheiben (3) zweier einander benachbarter Spuleneinheiten (2) liegen unmittelbar aneinander an;
**gekennzeichnet durch**:
- die Polscheiben (3) weisen im Bereich der Ansätze (9) formschlüssig ineinander greifende, **durch** eine Abfolge von axialen Vorsprüngen (10) und Ausnehmungen (11) gebildete erste Verzahnungen (12) auf;
- im Bereich der ersten Verzahnungen (12) der beiden Polscheiben (3) jeder Spuleneinheit (2) besteht mindestens ein Durchbruch (15) für einen Spulenwicklungsanschluss (30), wobei die beiden betreffenden Polscheiben im Übrigen im Bereich der ersten Verzahnungen eine geschlossene Oberfläche definieren;
- jeweils mindestens einer (10a) der Vorsprünge (10) jeder ersten Verzahnung (12) ist in Umfangsrichtung kürzer als die übrigen Vorsprünge (10b).

2. Dynamoelektrische Maschine nach Anspruch 1, **dadurch gekennzeichnet, dass** der Winkel (α) zwischen einer Kante (31) eines Vorsprungs (10) der ersten Verzahnung (12) und dem Zentrum der nächstliegenden Klaue (8) 360°:2n beträgt mit n als Anzahl der Pole der jeweiligen Spuleneinheit (2).

3. Dynamoelektrische Maschine nach einem der Ansprüche 1 oder 2, **dadurch gekennzeichnet, dass** die einander gegenüberliegenden Polscheiben (3) zweier einander benachbarter Spuleneinheiten (2) im Bereich von durch eine Abfolge von axialen Vorsprüngen (18) und Ausnehmungen (19) gebildeten zweiten Verzahnungen (17) formschlüssig ineinander greifen, wobei bei jeder Polscheibe (3) die Anzahl der Vorsprünge (18) bevorzugt der Anzahl der Klauen (8) entspricht.

4. Dynamoelektrische Maschine nach Anspruch 3, **dadurch gekennzeichnet, dass** der Winkel (β) zwischen einer Kante (23) eines Vorsprungs (18) der zweiten Verzahnung (17) und dem Zentrum der nächstliegenden Klaue (8) dem Betrag des Terms (360°:(n·p) - 180°:n) entspricht mit n als Anzahl der Pole pro Spuleneinheit (2) und p als Anzahl der Phasen.

5. Dynamoelektrische Maschine Anspruch 3 oder Anspruch 4, **dadurch gekennzeichnet, dass** in dem durch zwei ineinander greifende zweite Verzahnungen (17) gebildeten Übergangsbereich zweier Spuleneinheiten (2) eine vollständig geschlossene Oberfläche besteht.

6. Dynamoelektrische Maschine nach einem der Ansprüche 1 bis 5, **dadurch gekennzeichnet, dass** sie als Außenstator-Maschine ausgeführt ist, wobei die Polscheiben (3) unter Verzicht auf eine sie umgebende gesonderte Gehäusestruktur einen Teil des Maschinengehäuses bilden.

7. Dynamoelektrische Maschine nach Anspruch 6, **dadurch gekennzeichnet, dass** das Maschinengehäuse zwei endseitige Deckel umfasst, die jeweils eine Rotorlagerung aufweisen.

8. Dynamoelektrische Maschine nach einem der Ansprüche 6 oder 7, jeweils in Kombination mit Anspruch 3, **dadurch gekennzeichnet, dass** die Deckel zu den zweiten Verzahnungen (17) der Polscheiben (3) korrespondierende, mit diesen zusammenwirkende Verzahnungen aufweisen.

9. Dynamoelektrische Maschine nach Anspruch 7 oder Anspruch 8, **dadurch gekennzeichnet, dass** mindestens ein Deckel eine Montageanordnung, insbesondere einen Montageflansch, mindestens einen Montageansatz und/oder mindestens einen Montagevorsprung aufweist.

10. Dynamoelektrische Maschine nach einem der Ansprüche 1 bis 9, **dadurch gekennzeichnet, dass** im Bereich der ersten Verzahnung 12 die axial vorspringenden Ansätze 9 der Polscheiben 3 allein aus - in Umfangsrichtung zueinander beabstandeten - einzelnen Vorsprüngen 10 bestehen, wobei die Vorsprünge 10 mit ihren Stirnflächen 13 an einem Scheibenabschnitt 5 der jeweils anderen Polscheibe 3 anliegen.
